# DEMANDE DE BREVET EUROPEEN

(11) **EP 4 604 402 A1**
(43) Date de publication de la demande: **20.08.2025**
(21) Numéro de dépôt: 25156574.3
(22) Date de dépôt: 07.02.2025
(51) Int. Cl.: H04B 1/3816, H04B 1/40

(54) **COMMUNICATION AU SEIN D'UN DISPOSITIF ELECTRONIQUE**

(30) Priorité: 14.02.2024 FR 2401418
(71) Demandeur: STMicroelectronics International N.V., 1228 Plan-les-Ouates, Geneva (CH)
(72) Inventeur: TRAMONI, Alexandre, 83330 LE BEAUSSET (FR); DEMANGE, Nicolas, 83470 SAINT-MAXIMIN LA SAINTE BAUME (FR)
(74) Mandataire: Cabinet Beaumont

(57) **Abrégé**

La présente description concerne un élément sécurisé embarqué (105) comprenant :
- au moins une entrée (1052) adaptée à recevoir au moins un premier signal de données ;
- un circuit (1051) adapté à mettre en oeuvre une carte SIM embarquée ;
- au moins une sortie (1053) adaptée à fournir un deuxième signal ;
- un premier convertisseur de niveaux de tension (1055) adaptée à fournir ledit deuxième signal à ladite sortie ; et
- un sélecteur (1054) adapté à recevoir ledit première signal et à le fournir soit audit circuit (1051) soit à ladite sortie (1053) en fonction d'une commande.

## Description

### Domaine technique

La présente description concerne de façon générale les systèmes et dispositifs électroniques, et l'alimentation en énergie et la transmission de signaux au sein de ces systèmes et dispositifs électroniques. La présente description concerne de façon plus particulière l'adaptation de niveaux de tension au sein d'un système ou d'un dispositif électronique complexe.

### Technique antérieure

Les systèmes et dispositifs électroniques complexes peuvent être composés de plusieurs circuits, modules, ou soussystèmes, utilisant des niveaux de tension différents. L'utilisation de circuit d'adaptation de niveaux de tension est donc nécessaire pour le bon fonctionnement de ce type de système ou dispositif électronique.

Il serait souhaitable de pouvoir améliorer, au moins en partie, certains aspects de la gestion de niveaux de tension au sein d'un système ou dispositif électronique.

### Résumé de l'invention

Il existe un besoin pour des systèmes et dispositifs électroniques ayant une meilleure gestion des niveaux de tension utilisés par les circuits et modules qui les composent.

Il existe un besoin pour des systèmes et dispositifs électroniques plus compacts.

Un mode de réalisation pallie tout ou partie des inconvénients des gestions connues de différents niveaux de tension au sein d'un système ou dispositif électronique.

Un mode de réalisation prévoit un système ou dispositif électronique comprenant un élément sécurisé embarqué comportant lui-même un circuit convertisseur de niveau destiné à adapter les niveaux de tension de signaux destiné à une carte SIM.

Un mode de réalisation prévoit un élément sécurisé embarqué comprenant :
- au moins une entrée adaptée à recevoir au moins un premier signal de données ;
- un circuit adapté à mettre en oeuvre une carte SIM embarquée ;
- au moins une sortie adaptée à fournir un deuxième signal ;
- un premier convertisseur de niveaux de tension adapté à fournir ledit deuxième signal à ladite sortie ; et
- un sélecteur adapté à recevoir ledit première signal et à le fournir soit audit circuit soit à ladite sortie en fonction d'une commande.

Selon un mode de réalisation, ladite sortie est adaptée à fournir ledit deuxième signal à un premier emplacement destiné à une première carte SIM.

Selon un mode de réalisation, ledit premier convertisseur de niveaux de tension est bidirectionnel.

Selon un mode de réalisation, ledit premier convertisseur de niveaux de tension comprend :
- un noeud d'entrée ;
- un noeud de sortie ;
- une première branche, reliant ledit noeud d'entrée audit noeud de sortie, comportant un premier circuit retardateur et un premier circuit élévateur de niveaux de tension ; et
- une deuxième branche, reliant le noeud de sortie audit noeud d'entrée, comportant un deuxième circuit retardateur et un deuxième circuit élévateur de niveaux de tension.

Un autre mode de réalisation prévoit une puce comprenant un élément sécurisé embarqué décrit précédemment.

Selon un mode de réalisation, la puce comprend, en outre, un contrôleur de communication en champs proche.

Un autre mode de réalisation prévoit un dispositif électronique comprenant une puce décrite précédemment, un routeur et ledit premier emplacement.

Selon un mode de réalisation, le dispositif comprend, en outre, un deuxième emplacement destiné à une deuxième carte SIM.

Selon un mode de réalisation, le dispositif comprend, en outre, un deuxième convertisseur de niveaux de tension reliant ledit routeur et ledit deuxième emplacement.

Selon un mode de réalisation, le dispositif est un téléphone portable.

Un autre mode de réalisation prévoit un procédé de communication au sein du dispositif décrit précédemment entre ledit routeur et ledit premier emplacement.

Selon un mode de réalisation, le procédé comprend les étapes successives suivantes :
- envoyer une commande audit sélecteur indiquant que ledit premier emplacement est sélectionné ;
- envoyer, par ledit routeur, ladite première tension à l'entrée dudit élément sécurisé embarqué ;
- convertir ladite première tension, par ledit premier convertisseur de niveaux de tension, en ladite deuxième tension ; et
- envoyer, par ledit élément sécurisé embarqué, ladite deuxième tension audit premier emplacement.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un mode de réalisation d'un dispositif électronique ;
la figure 2 représente plus en détails le mode de réalisation de la figure 1 ;
la figure 3 représente un circuit convertisseur de niveau selon un mode de réalisation ; et
la figure 4 représente des chronogrammes illustrant le fonctionnement du circuit de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent les systèmes et dispositifs électroniques complexes, et plus particulièrement la transmission de signaux au sein de tels systèmes et dispositifs électroniques. Les modes de réalisation se rapportent plus particulièrement à l'utilisation d'une ou plusieurs cartes SIM (subscriber identity/identification module) et d'une ou plusieurs cartes SIM embarquées dans de tels systèmes ou dispositifs électroniques. Une carte SIM est un dispositif électronique, généralement une puce équipée d'au moins un microprocesseur et un moyen de stockage de données, portant l'identité d'un utilisateur. Une carte SIM embarquée, ou carte eSIM, est un moyen logiciel portant l'identité d'un utilisateur, elle peut être mise en oeuvre par un circuit comprenant, par exemple, un processeur et un moyen de stockage de donnée.

Il existe des systèmes ou dispositifs électroniques capables de mettre en oeuvre plusieurs cartes SIM et/ou cartes SIM embarquée. Les cartes SIM et les cartes SIM embarquées ne sont pas toutes adaptées à recevoir des signaux référencés à des mêmes niveaux de tension. Les modes de réalisation décrits ci-après se proposent de fournir un dispositif électronique compact dans lequel les cartes SIM et cartes SIM embarquées reçoivent des signaux ayant des niveaux de tension adaptés.

De plus, les modes de réalisation décrits ci-après sont tout particulièrement adaptés à des systèmes et dispositifs électroniques utilisant des cartes SIM et des cartes SIM embarquées, comme des téléphones portables ou des téléphones portables intelligents, des tablettes connectées, ou tout autre objets connectés pouvant utiliser une carte SIM.

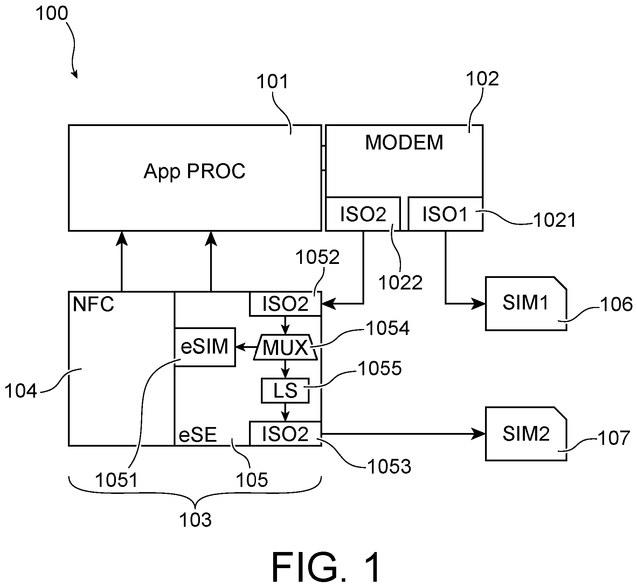

La figure 1 représente, schématiquement et sous forme de bloc, un mode de réalisation d'un dispositif électronique 100.

Selon un exemple, le dispositif électronique 100 comprend un processeur 101 (App Procédé), comme par exemple un processeur adapté à mettre en oeuvre des fonctions applicatives.

Le dispositif 100 comprend, en outre, un routeur 102 (Modem) adapté à transmettre des signaux au sein du dispositif 100. Selon un exemple, le routeur 102 peut échanger des signaux avec le processeur 101. Selon un mode de réalisation, le routeur 102 comprend au moins deux bornes 1021 (ISO1) et 1022 (ISO2). Les signaux de données fournis par le routeur 102 sont tous référencés à un premier niveau de tension Vdd1.

Le dispositif 100 comprend, en outre, une puce 103 adaptée à communiquer avec le processeur 101 et/ou le routeur 102.

La puce 103 comporte, de façon optionnelle, un circuit adapté à mettre en oeuvre une communication 104 (NFC). Selon exemple préféré, le circuit 104 est adapté à mettre en oeuvre une communication en champ proche (Near Field Communication), aussi appelé NFC, le circuit 104 est, dans ce cas, aussi appelé contrôleur NFC 104.

Selon un mode de réalisation, la puce 103 comporte un élément sécurisé embarqué (eSE) 105 adapté à mettre en oeuvre des opérations sécurisées. L'élément 105 comprend généralement, son ou ses propres processeurs, sa ou ses propres mémoires, et/ou son ou ses propres circuits mettant en oeuvre diverses fonctions. Dans le mode de réalisation décrit ici, l'élément sécurisé embarqué 104 comprend au moins un circuit 1051 (eSIM) adapté à mettre en oeuvre une carte SIM embarquée. Comme dit précédemment, le circuit 1051 peut comprendre un processeur et un moyen de stockage de données.

L'élément sécurisé embarqué 105 comprend, en outre, au moins deux bornes de communication 1052 (ISO2) et 1053 (ISO2), un sélecteur 1054 et un convertisseur de niveaux de tension 1055 (LS) dont les utilisations sont décrites ci-après. Le sélecteur 1054 comprend une entrée reliée, de préférence connectée, à la borne 1052, une borne de commande, non représentée en figure 1, et au moins deux sorties, l'une étant reliée au circuit 1051 et l'autre étant reliée à une entrée du convertisseur de niveaux de tension 1055. Une sortie du convertisseur 1055 est reliée, de préférence connectée, à la borne 1053.

Selon un mode de réalisation, le dispositif électronique 100 comprend un ou plusieurs emplacements destinés à recevoir des cartes SIM. En particulier, en figure 1, le dispositif 100 comprend deux emplacements 106 (SIM1) et 107 (SIM2). L'emplacement 106 est reliée à la borne 1021 du routeur 102. Selon un mode de réalisation, l'emplacement 107 est reliée à la borne 1053 de l'élément sécurisé 105.

Le fonctionnement du dispositif 100 est le suivant. Comme décrit précédemment, le dispositif 100 est adapté à mettre en oeuvre deux cartes SIM et une carte SIM embarquée. Le routeur 102 ne comprend cependant que deux sorties lui permettant de transmettre des données à ces cartes SIM et SIM embarquée. Pendant l'utilisation du dispositif 100 il est donc nécessaire de faire un choix sur quelle carte SIM et/ou SIM embarquée sont utilisées. Une carte SIM insérée dans l'emplacement 106 est toujours utilisé puisqu'elle est reliée directement au routeur. Une carte SIM insérée dans l'emplacement 107 n'est pas toujours utilisée puisqu'elle n'est pas reliée directement au routeur 102. L'utilisateur du dispositif 100 a donc le choix entre utiliser une carte SIM embarquée mise en oeuvre par le circuit 1051 ou une carte SIM insérée dans l'emplacement 107.

Lorsque l'utilisateur choisit d'utiliser une carte SIM embarquée, un procédé de communication entre le routeur 102 et le circuit 1051 est le suivant. Une commande est envoyée au sélecteur 1054 pour indiquer que le circuit 1051 est sélectionné. Cette étape peut être réalisée en amont de la mise en oeuvre d'une communication. Lorsque le routeur 102 dispose d'un signal de données à transmettre au circuit 1051, il la transmet en utilisant sa borne 1022, la connexion entre la borne 1022 et la borne 1052, puis la borne 1052. Le signal de données est ensuite transmis par le sélecteur 1054 au circuit 1051. Selon un mode de réalisation, le circuit 1051 est adapté à recevoir des signaux de données référencés au premier niveau de tension Vdd1.

Lorsque l'utilisateur choisit d'utiliser une carte SIM placée dans l'emplacement 107, un procédé de communication entre le routeur 102 et l'emplacement 107 est le suivant. Une commande est envoyée au sélecteur 1054 pour indiquer que l'emplacement 107 est sélectionné. Cette étape peut être réalisé en amont de la mise en oeuvre d'une communication. Lorsque le routeur 102 dispose d'un signal de données à transmettre à l'emplacement 107, il la transmet en utilisant l'élément sécurisé 105, c'est-à-dire la borne 1022, la connexion entre la borne 1022 et la borne 1052, puis la borne 1052. Le signal de données est ensuite transmis par le sélecteur 1054 au convertisseur de niveaux de tension 1055 qui le convertit en un signal de données référencé à un deuxième niveau de tension Vdd2, différent du premier niveau de tension Vdd1. Selon un mode de réalisation, l'emplacement 107, et une carte SIM qui y est insérée sont adaptés à recevoir des signaux de données référencés au deuxième niveau de tension Vdd2. Le nouveau signal de données est ensuite transmis en utilisant la borne 1053 et la liaison entre la borne 1053 et l'emplacement.

Selon un exemple, les liaisons entre les bornes 1022, 1021, 1052, 1053 et les emplacements 106 et 107 sont des liaisons utilisant des protocoles de communication suivant la norme ISO7816.

Selon un exemple, le dispositif 100 pourrait, en outre, comprendre un convertisseur de niveaux de tension disposé entre la borne 1021 du routeur 102 et l'emplacement 106. Ce convertisseur permettrait de convertir les niveaux de tension d'un signal fourni par le routeur 102 pour l'emplacement 107.

Un avantage de ce mode de réalisation est qu'intégrer directement à l'élément sécurisé 105 un sélecteur et un convertisseur du type des sélecteur 1054 et convertisseur 1055, permet de rendre le dispositif 100 plus compact.

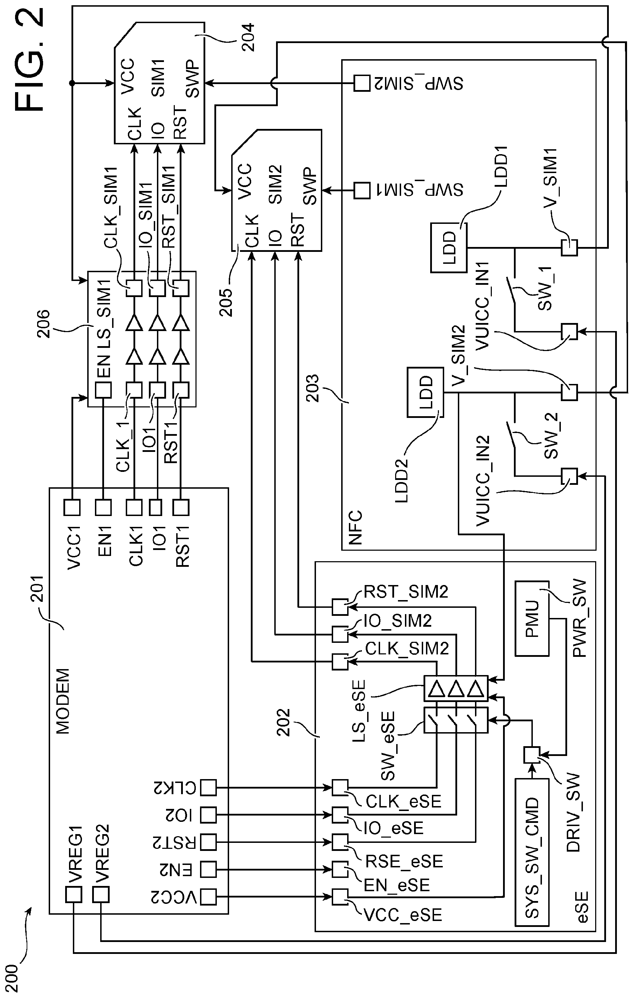

La figure 2 représente plus en détails un mode de réalisation d'un dispositif électronique 200 du type du dispositif électronique 100 décrit en relation avec la figure 1.

Comme le dispositif 100, le dispositif électronique 200 comprend :
- un routeur 201 (Modem) du type du routeur 101 de la figure 1 ;
- une puce comportant un élément sécurisé embarqué 202 (eSE), du type de l'élément sécurisé embarqué 105, et un contrôleur NFC 203 (NFC) du type du contrôleur NFC 104 de la figure 1 ;

- deux emplacements 204 (SIM1) et 205 (SIM2) destinés à recevoir des cartes SIM, du type des emplacements 106 et 107 de la figure 1 ; et
- un convertisseur de niveaux de tension 206 (LS_SIM1) reliant le routeur 201 à l'emplacement 204.

Le routeur 201 comprend deux séries de bornes de communication, chaque série de bornes de communication étant dédiée à fournir des signaux à une carte SIM ou une carte SIM embarquée, et deux bornes d'alimentation VREG1 et VREG2. Chaque série de borne de communication comprend:
- une borne d'alimentation VCC1, VCC2 fournissant une tension d'alimentation permettant de référencer les signaux de données ;
- une borne d'activation EN1, EN2 fournissant un signal d'activation ;
- une borne de réinitialisation RST1, RST2 fournissant un signal de réinitialisation ;
- une borne de communication IO1, IO2 fournissant un signal de communication de données ; et
- une borne d'horloge CLK1, CLK2 fournissant un signal d'horloge.

L'élément sécurisé embarqué 202 comprend un circuit adapté à mettre en oeuvre une carte SIM embarquée, non représenté en figure 2, un sélecteur, un convertisseur de niveaux de tension LS_eSE et des bornes de communication.

Les bornes de communication de l'élément sécurisé 202 sont les suivantes :
- une borne d'alimentation VCC_eSE reliée, de préférence connectée, à la borne d'alimentation VCC2 du routeur 101 ;
- une borne d'activation EN_eSE reliée, de préférence connectée, à la borne d'activation EN2 du routeur 101 ;
- une borne de réinitialisation RST_eSE reliée, de préférence connectée, à la borne de réinitialisation RST2 du routeur 101 ;
- une borne de communication IO_eSE reliée, de préférence connectée, à la borne de communication IO2 du routeur 101 ;
- une borne d'horloge CLK_eSE reliée, de préférence connectée, à la borne d'horloge CLK2 du routeur 101 ;
- une borne d'horloge CLK_SIM2 adaptée à fournir un signal d'horloge à l'emplacement 205 ;
- une borne de communication IO_SIM2 adaptée à fournir un signal de données à l'emplacement 205 ; et
- une borne de réinitialisation RST_SIM2 adaptée à fournir un signal de réinitialisation à l'emplacement 205.

Le sélecteur de l'élément sécurisé 202 comporte des interrupteurs SW-eSE commandés par un circuit de pilotage DRIV-eSE recevant une commande de la part d'un circuit de commande SYS_SW_CMD et alimenté par un circuit d'alimentation PWR_SW (PMU). Dans l'exemple de la figure 2, les interrupteurs SW_eSE sont au nombre de trois (3) et comprennent chacun une entrée reliée, de préférence, respectivement, aux bornes RST_eSE, IO_eSE et CLK_eSE. Les sorties des interrupteurs SW-eSE sont reliées, de préférence connectées, à des entrées du convertisseur de niveaux de tension LS_eSE.

Comme décrit précédemment, le sélecteur permet de diriger les signaux de données reçus de la part du routeur 201 et destinés à une carte SIM ou une carte SIM embarquée et à les transmettre à la carte SIM ou à la carte SIM embarquée en fonction d'une commande. Dans le cas illustré ici, le circuit de commande SYS_SW_CMD peut être un processeur de l'élément 202.

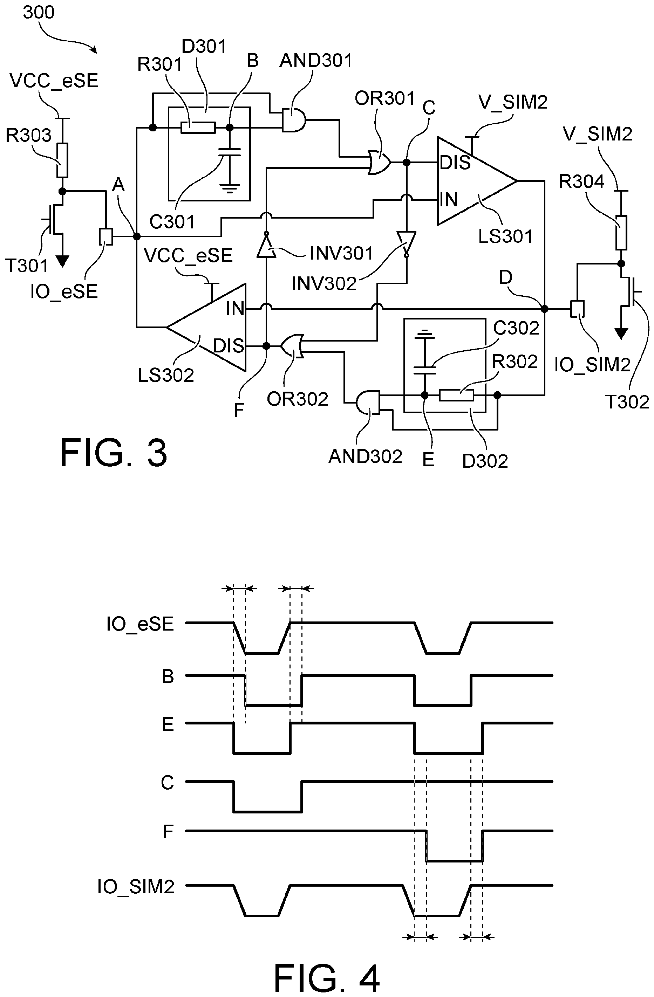

Selon un mode de réalisation, le convertisseur de niveaux de tension LS_eSE comprend autant d'entrées que l'interrupteur SW_eSE comprend de sorties. Ici le convertisseur de niveaux de tension LS_eSE comprend trois entrées et trois sorties. Chaque sortie du convertisseur LS_eSE est reliée, de préférence connectée, à une des bornes de communication CLK_SIM2, IO_SIM2 et RST_SIM2 de l'élément sécurisé 202. Le convertisseur LS_eSE comprend, en outre, deux bornes d'alimentation, l'une recevant la tension d'alimentation fournie par la borne d'alimentation VCC_eSE correspondant à un premier niveau de tension, du type du premier niveau de tension Vdd1 décrit en relation avec la figure 1, et l'autre recevant une deuxième tension d'alimentation correspondant à un deuxième niveau de tension, du type du deuxième niveau de tension Vdd2 décrit en relation avec la figure 1. Il est à noter que la partie du convertisseur LS_eSE convertissant le niveau de tension du signal de données transmis par la borne IO_eSE est bidirectionnel. Un exemple détaillé du convertisseur LS_eSE et son fonctionnement sont décrits en relation avec les figures 3 et 4.

Comme décrit précédemment, le convertisseur de niveaux de tension LS_eSE permet de convertir les niveaux de tension des signaux de données fournis par le routeur 201 avant de les transmettre à l'emplacement 205.

Le contrôleur NFC 203 est utilisé ici pour communiquer avec les emplacements 204 et 205, mais aussi pour convoyer les tensions d'alimentation fournies par les bornes VREG1 et VREG2 du routeur 201, ou par le contrôleur NFC 203 comme décrit ci-après. Pour cela, le contrôleur NFC 203 comprend deux bornes de communication SWP_SIM1 et SWP_SIM2 adaptés à fournir un signal de communication aux emplacements 204 et 205.

Pour fournir les tensions d'alimentation, le contrôleur NFC 203 comprend deux bornes de réception d'alimentation VUICC_IN1 et VUICC_IN2, deux interrupteurs SW_1 et SW_2, deux régulateurs de tensions LDO1 (LDO) et LDO2 (LDO), et deux bornes de transmission d'alimentation V_SIM1 et V_SIM2. La borne VUICC_IN1, respectivement VUICC_IN2, est reliée, de préférence connectée, à la borne VREG1, respectivement VREG2, du routeur 201. L'interrupteur SW_1, respectivement SW_2, comprend une première borne de conduction reliée, de préférence connectée, à la borne VUICC_IN1, respectivement VUICC_IN2, et une deuxième borne de conduction reliée, de préférence connectée, à la borne V_SIM1, respectivement V_SIM2. Une sortie du régulateur de tension LDO1, respectivement LDO2, est reliée, de préférence connectée, à la borne V_SIM1, respectivement V_SIM2.

Les emplacements 204 et 205 comprennent chacun cinq bornes parmi lesquelles :
- une borne VCC adaptée à recevoir une tension d'alimentation ;
- une borne CLK adaptée à recevoir un signal d'horloge ;
- une borne IO adaptée à recevoir un signal de données et à fournir un signal de données ;
- une borne RST adaptée à recevoir un signal de réinitialisation ; et
- une borne SWP adaptée à recevoir un signal de données et à fournir un signal de données.

Selon un mode de réalisation, les bornes de l'emplacement 205 sont reliées de la manière suivante :
- la borne VCC est reliée, de préférence connectée, à la borne V_SIM2 du contrôleur NFC 203 ;
- une borne CLK est reliée, de préférence connectée, à la borne CLK_SIM2 de l'élément sécurisé embarqué 202 ;
- une borne IO est reliée, de préférence connectée, à la borne IO_SIM2 de l'élément sécurisé embarquée 202 ;

- une borne RST est reliée, de préférence connectée, à la borne RST_SIM2 de l'élément sécurisé embarquée 202 ; et
- une borne SWP est reliée, de préférence connectée, à la borne SWP_SIM2 du contrôleur NFC 203.

Le convertisseur de niveaux de tension 206 est utilisé pour adapter les niveaux de tension des signaux fournis par le routeur 201 à l'emplacement 204. Pour cela, le convertisseur 206 comprend les bornes suivantes :
- une borne d'activation EN reliée, de préférence connectée, à la borne EN1 du routeur 201 ;
- une borne d'horloge d'entrée CLK1 reliée, de préférence connectée, à la borne CLK1 du routeur 201 ;
- une borne de communication d'entrée IO1 reliée, de préférence connectée, à la borne IO1 du routeur 201 ;
- une borne de réinitialisation d'entrée RST1 reliée, de préférence connectée, à la borne RST1 du routeur 201 ;
- une borne d'horloge de sortie CLK-SIM1 reliée, de préférence connectée, à la borne CLK de l'emplacement 204 ;
- une borne de communication de sortie IO_SIM1 reliée, de préférence connectée, à la borne IO de l'emplacement 204 ; et
- une borne de réinitialisation de sortie RST_SIM1 reliée, de préférence connectée, à la borne RST de l'emplacement 204.

Le convertisseur 206 comprend plusieurs circuits élévateurs de tension reliant ses bornes d'entrée et de sortie.

Selon un mode de réalisation, les bornes de l'emplacement 204 sont reliées de la manière suivante :
- la borne VCC est reliée, de préférence connectée, à la borne V_SIM1 du contrôleur NFC 203 ;
- une borne CLK est reliée, de préférence connectée, à la borne CLK_SIM1 du convertisseur de niveaux de tension 206 ;
- une borne IO est reliée, de préférence connectée, à la borne IO_SIM1 du convertisseur de niveaux de tension 206 ;
- une borne RST est reliée, de préférence connectée, à la borne RST_SIM1 du convertisseur de niveaux de tension 206 ; et
- une borne SWP est reliée, de préférence connectée, à la borne SWP_SIM1 du contrôleur NFC 203.

Le fonctionnement du dispositif 200 est identique au fonctionnement du dispositif 100 décrit en relation avec la figure 1.

La figure 3 est un schéma électrique d'une partie d'un convertisseur de niveaux de tension 300 du type du convertisseur de niveaux de tension LS_eSE décrit en relation avec la figure 2. Plus particulièrement, la figure 3 illustre la partie du convertisseur 300 permettant de convertir le signal de données fourni par la borne IO_eSE en le signal de donnée fourni par la borne IO_SIM2 de l'élément sécurisé embarqué 202.

Le convertisseur 300 comporte deux branches. Une première branche permet de convertir le niveau de tension d'un premier signal de données reçu sur la borne IO_eSE pour fournir un deuxième signal de données à la borne IO_SIM2. Une deuxième branche permet de convertir le niveau de tension d'un troisième signal de données reçu sur la borne IO_SIM2 pour fournir un quatrième signal de données à la borne IO_eSE.

La première branche comprend un élément à retard D301 comportant une résistance R301 et un condensateur C301. Une première borne de la résistance R301 est reliée, de préférence connectée, à un noeud A, lui-même relié à la borne IO_eSE. Une deuxième borne de la résistance R301 est reliée, de préférence connectée, à un noeud B. Une première borne du condensateur C301 est reliée, de préférence connectée, au noeud B, et une deuxième borne du condensateur C301 est reliée, de préférence connectée, à un noeud recevant le potentiel de référence.

La première branche comprend, en outre, une porte logique AND301 de type "ET" (AND) et une porte logique OR301 de type "OU" (OR). Une première entrée de la porte AND301 est reliée, de préférence connectée, au noeud A, et une deuxième entrée de la porte AND301 est reliée, de préférence connectée, au noeud B. Une sortie de la porte AND301 est reliée, de préférence connectée, à une première entrée de la porte OR301. Une sortie de la porte OR301 est reliée, de préférence connectée, à un noeud C.

La première branche comprend, en outre, un circuit élévateur de niveaux de tension LS301, ou élévateur de niveaux de tension LS301. L'élévateur LS301 comprend une entrée DIS reliée, de préférence connectée, au noeud C, et une entrée IN reliée, de préférence connectée, au noeud A. Une borne d'alimentation de l'élévateur est reliée, de préférence connectée, au noeud recevant la tension V_SIM2. Une sortie de l'élévateur LS301 est reliée, de préférence connectée, au noeud D.

La deuxième branche comprend un élément à retard D302 comportant une résistance R302 et un condensateur C302. Une première borne de la résistance R302 est reliée, de préférence connectée, au noeud D. Une deuxième borne de la résistance R302 est reliée, de préférence connectée, à un noeud E. Une première borne du condensateur C302 est reliée, de préférence connectée, au noeud E, et une deuxième borne du condensateur C302 est reliée, de préférence connectée, au noeud recevant le potentiel de référence.

La deuxième branche comprend, en outre, une porte logique AND302 de type "ET" (AND) et une porte logique OR302 de type "OU" (OR). Une première entrée de la porte AND302 est reliée, de préférence connectée, au noeud D, et une deuxième entrée de la porte AND302 est reliée, de préférence connectée, au noeud E. Une sortie de la porte AND302 est reliée, de préférence connectée, à une première entrée de la porte OR302. Une sortie de la porte OR302 est reliée, de préférence connectée, à un noeud F.

La deuxième branche comprend, en outre, un circuit élévateur de niveaux de tension LS302, ou élévateur de niveaux de tension LS302. Selon un mode de réalisation, l'élévateur LS302 est identique au LS301. L'élévateur LS302 comprend une entrée DIS reliée, de préférence connectée, au noeud F, et une entrée IN reliée, de préférence connectée, au noeud D. Une borne d'alimentation de l'élévateur est reliée, de préférence connectée, au noeud recevant la tension V_SIM2. Une sortie de l'élévateur LS302 est reliée, de préférence connectée, à un noeud A.

Le convertisseur 300 comprend, en outre, deux portes logiques INV301 et INV302 de type inverseuse (NON). Une entrée de la porte INV301 est reliée, de préférence connectée, à l'entrée DIS de l'élévateur LS302, et une sortie de la porte INV301 est reliée, de préférence connectée, à une deuxième entrée de la porte OR301. Une entrée de la porte INV302 est reliée, de préférence connectée, à l'entrée DIS de l'élévateur LS301, et une sortie de la porte INV302 est reliée, de préférence connectée, à une deuxième entrée de la porte OR302.

Le convertisseur 300 comprend, en outre, une résistance de rappel R303 et un transistor T302 permettant de fixer le niveau de tension au niveau de la borne IO_eSE. La résistance R303 comprend une première borne reliée, de préférence connectée, au noeud A relié à la borne d'alimentation VCC_eSE, et une deuxième borne reliée, de préférence connectée, à la borne IO_eSE. Une première borne de conduction du transistor T302 est reliée, de préférence connectée, à la borne IO_eSE, et une deuxième de conduction du transistor T302 est reliée, de préférence connectée, à un noeud recevant un potentiel de référence, par exemple la masse. Selon un exemple, une borne de commande du transistor T302 est laissée flottante. Selon un exemple, le transistor T302 est un transistor à effet de champ à grille métal-oxyde (metal-oxide-semiconductor field-effect transistor), ou transistor MOSFET, ou transistor MOS. De plus, le transistor T302 est un transistor MOS à canal N, ou transistor MOS de type N, ou transistor NMOS.

Le convertisseur 300 comprend, en outre, une résistance de rappel R304 et un transistor T302 permettant de fixer le niveau de tension au niveau de la borne IO_SIM2. La résistance R304 comprend une première borne reliée, de préférence connectée, au noeud D relié à la borne d'alimentation VCC_SIM2, et une deuxième borne reliée, de préférence connectée, à la borne IO_SIM2. Une première borne de conduction du transistor T302 est reliée, de préférence connectée, à la borne IO_SIM2, et une deuxième de conduction du transistor T302 est reliée, de préférence connectée, à un noeud recevant un potentiel de référence, par exemple la masse. Selon un exemple, une borne de commande du transistor T302 est laissée flottante. Selon un exemple, le transistor T302 est un transistor NMOS.

Le fonctionnement du convertisseur de niveaux de tension 300 est décrit en relation avec la figure 4.

La figure 4 comprend des chronogrammes illustrant le fonctionnement du convertisseur de niveaux de tension 300 décrit en relation avec la figure 3.

Plus particulièrement, la figure 4 représente l'évolution temporelle des signaux de données suivants :
- un signal IO_eSE représentant l'évolution du signal de données présent au niveau de la borne IO_eSE ;
- un signal B représentant l'évolution du signal de données présent au niveau du noeud B ;
- un signal E représentant l'évolution du signal de données présent au niveau du noeud E ;
- un signal C représentant l'évolution du signal de données présent au niveau du noeud C ;
- un signal F représentant l'évolution du signal de données présent au niveau du noeud F ; et
- un signal IO_SIM2 représentant l'évolution du signal de données présent au niveau de la borne IO_SIM2.

Dès que le signal IO_eSE présente un front descendant les signaux E, C et IO_SIM2 présentent immédiatement tous un front descendant et le signal F n'est pas modifié. Le signal B présente aussi un front descendant retardé par l'élément à retard D301. Cependant quand le signal IO_eSE présente un front montant, les signaux B, E, C et IO_SIM2 présentent tous un front montant avec un retard défini par l'élément de retard D301, et le signal F n'est pas modifié.

A l'inverse, dès que le signal IO_SIM2 présente un front descendant les signaux B, E et IO_eSE présentent immédiatement tous un front descendant et le signal C n'est pas modifié. Le signal F présente aussi un front descendant retardé par l'élément à retard D301. Cependant quand le signal IO_SIM2 présente un front montant, les signaux B, E, F et IO_eSE présentent tous un front montant avec un retard défini par l'élément de retard D301, et le signal C n'est pas modifié.

Un avantage du convertisseur de niveaux de tension 300 est que la présence des éléments à retard D301 et D302 permettent d'obtenir un convertisseur bidirectionnel, c'est-à-dire un convertisseur capable de convertir le niveau de tension d'un signal arrivant au niveau de la borne IO_eSE et aussi d'un signal arrivant au niveau de la borne IO_SIM2. Sans la présence des éléments à retard D301 et D302, aucune donnée ne serait transmise.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Elément sécurisé embarqué (105 ; 202) comprenant :
- au moins une entrée (1052 ; RST_eSE, IO_eSE, CLK_eSE) adaptée à recevoir au moins un premier signal de données ;
- un circuit (1051) adapté à mettre en oeuvre une carte SIM embarquée ;
- au moins une sortie (1053 ; RST_SIM2, IO_SIM2, CLK_SIM2) adaptée à fournir un deuxième signal ;
- un premier convertisseur de niveaux de tension (1055 ; LS_eSE ; 300) adapté à fournir ledit deuxième signal à ladite sortie ; et
- un sélecteur (1054 ; SW_eSE) adapté à recevoir ledit première signal et à le fournir soit audit circuit (1051) soit à ladite sortie (1053 ; RST_SIM2, IO_SIM2, CLK_SIM2) en fonction d'une commande.

2. Elément selon la revendication 1, dans lequel ladite sortie est adaptée à fournir ledit deuxième signal à un premier emplacement (107 ;205) destiné à une première carte SIM.

3. Elément selon la revendication 1 ou 2, dans lequel ledit premier convertisseur (1055 ; LS_eSE ; 300) de niveaux de tension est bidirectionnel.

4. Elément selon la revendication 3, dans lequel ledit premier convertisseur de niveaux de tension (1055 ; LS_eSE) comprend :
- un noeud d'entrée (A, D) ;
- un noeud de sortie (D, A) ;
- une première branche, reliant ledit noeud d'entrée (A, D) audit noeud de sortie (D, A), comportant un premier circuit retardateur (D301, D302) et un premier circuit élévateur de niveaux de tension (LS301, LS302) ; et
- une deuxième branche, reliant le noeud de sortie (D, A) audit noeud d'entrée (A, D), comportant un deuxième circuit retardateur (D302, D301) et un deuxième circuit élévateur de niveaux de tension (LS302, LS301).

5. Puce (103) comprenant un élément sécurisé embarqué (105 ; 202) selon l'une quelconque des revendications 1 à 4.

6. Puce selon la revendication 5, comprenant, en outre, un contrôleur de communication en champs proche (104 ; 203).

7. Dispositif électronique (100 ; 200) comprenant une puce selon la revendication 5 ou 6, un routeur (102 ; 201) et ledit premier emplacement (107 ; 205).

8. Dispositif selon la revendication 7, comprenant, en outre, un deuxième emplacement (106 ; 204) destiné à une deuxième carte SIM.

9. Dispositif selon la revendication 8, comprenant, en outre, un deuxième convertisseur de niveaux de tension (206) reliant ledit routeur et ledit deuxième emplacement (106 ; 204) .

10. Dispositif selon l'une quelconque des revendications 7 à 9, étant un téléphone portable.

11. Procédé de communication au sein du dispositif selon l'une quelconque des revendications 7 à 10 entre ledit routeur (102 ; 201) et ledit premier emplacement (107 ; 205) .

12. Procédé selon la revendication 11, comprenant les étapes successives suivantes :
- envoyer une commande audit sélecteur (1054) indiquant que ledit premier emplacement (107 ; 205) est sélectionné ;
- envoyer, par ledit routeur (102 ; 201), ladite première tension à l'entrée dudit élément sécurisé embarqué (103 ; 202) ;
- convertir ladite première tension, par ledit premier convertisseur de niveaux de tension (1055 ; LS_eSE ; 300), en ladite deuxième tension ; et
- envoyer, par ledit élément sécurisé embarqué (103 ; 202), ladite deuxième tension audit premier emplacement (107 ; 205).
